# EUROPÄISCHE PATENTSCHRIFT

(11) **EP 1 285 326 B1**
(45) Veröffentlichungstag und Bekanntmachung des Hinweises auf die Patenterteilung: **08.03.2006**
(21) Anmeldenummer: 00922406.4
(22) Anmeldetag: 16.05.2000
(51) Int. Cl.: G06F 3/00, G06F 1/00

(54) **VERFAHREN UND TERMINAL ZUR EINGABE VON INSTRUKTIONEN**
METHOD AND TERMINAL FOR INPUTTING INSTRUCTIONS
PROCEDE ET TERMINAL PERMETTANT D'ENTRER DES INSTRUCTIONS

(43) Veröffentlichungstag der Anmeldung: 26.02.2003
(73) Patentinhaber: Swisscom Mobile AG, 3050 Bern (CH)
(72) Erfinder: LAUPER, Eric, CH-3014 Bern (CH); HUBER, Adriano, CH-6600 Locarno (CH)
(74) Vertreter: P&TS Patents & Technology Surveys SA
(86) Internationale Anmeldenummer: PCT/CH2000/000269
(87) Internationale Veröffentlichungsnummer: WO 2001/088680

(56) Entgegenhaltungen:
- EP-A- 0 677 801
- US-A- 5 844 544
- "METHOD FOR ACCESS CONTROL VIA GESTURAL VERIFICATION" IBM TECHNICAL DISCLOSURE BULLETIN,US,IBM CORP. NEW YORK, Bd. 36, Nr. 9B, 1. September 1993 (1993-09-01), Seiten 487-488, XP000397236 ISSN: 0018-8689

## Beschreibung

### Technisches Gebiet

Die vorliegende Erfindung betrifft ein Verfahren und ein Terminal zur Eingabe von Instruktionen, insbesondere zur augengesteuerten Eingabe von Instruktionen an ein Datenverarbeitungssystem und auf einen Fernserver in einem Kommunikationsnetz mit einer Datenbank.

### Stand der Technik

Es sind schon Systeme bekannt, die die Steuerung eines Geräts mit den Augen erlauben. Solche Systeme werden unter anderem angewendet, wenn sich eine Handsteuerung als unmöglich oder unpraktisch erweist, oder als zusätzlichen, schnellen Eingabekanal, um Vorrichtungen zu steuern.

Das Dokument GB-A-2 281 838 beschreibt eine Vorrichtung, die auf Blinzeln des Benutzers reagiert. Ein System zur Umweltsteuerung mit Hilfe des menschlichen Auges ist auch im Deutschen Gebrauchsmuster DE-U1-29610766 beschrieben. EP-A2-0 816 984 beschreibt ein System, das die Blickrichtung auf einem Bildschirm ermittelt, um die Bildteile zu bestimmen, für die sich der Betrachter interessiert.

US-A-5,844,544 beschreibt eine augengesteuerte Vorrichtung, in welcher der Benutzer einem besonderen Protokoll folgen muss, um Zeichen mit den Augen auszuwählen. Die Vorrichtung wird kalibriert, um sie an jeden Benutzer anzupassen. Das Protokoll ist für jeden Benutzer dasselbe.

EP-A1-0 677 801 beschreibt ein Verfahren, um Passwörter einzugeben, indem der Benutzer Teile eines Bildes in einer individuellen Sequenz berührt oder mit einem Zeiger selektiert.

Der Artikel "Method for access control via gestural verification", IBM Technical Disclosure Bulletin 09B, Vol. 36, S. 487-488) beschreibt ein Verfahren, um Instruktionen mit willentlichen Körperbewegungen einzugeben. Der Benutzer kann auf diese Weise Passwörter eingeben.

Augenbewegungen sind manchmal schwer zu kontrollieren; das Auge macht auch unwillkürliche Bewegungen, unter anderem Saccaden, die unter Umständen als Instruktion für die gesteuerte Vorrichtung interpretiert werden könnten. Diese Verfahren eignen sich daher kaum, um sicherheitskritische Instruktionen einzugeben.

In vielen Fällen ist die Nicht-Repudiation der Instruktion ein wichtiges Sicherheitskriterium. Vor allem bei Transaktionsverfahren ist es wichtig, dass die Transaktion nachträglich nicht abgestritten werden kann.

Es sind ausserdem Systeme bekannt, in welchen Augenparameter als biometrische Schlüssel verwendet werden, um den Zugriff auf Systeme oder Dienste zu erlauben. Es wurde unter anderem vorgeschlagen, das Motiv der Iris oder der Retina zu verwenden, um den Betrachter zu authentifizieren oder sogar, um ihn zu identifizieren.

### Darstellung der Erfindung

Es ist eine Aufgabe dieser Erfindung, ein neues und besseres Verfahren anzubieten, mit welchem Instruktionen mit den Augen eingegeben werden können.

Ein anderes Ziel ist es, ein neues und besseres System anzubieten, mit welchem Instruktionen so eingegeben werden, dass die Absicht des Instruktionsgebers nicht bestritten werden kann (Nicht-Repudiation).

Ein anderes Ziel ist es, ein neues und besseres System anzubieten, mit welchem Instruktionen nur vom berechtigten Benutzer eingegeben werden können.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass Instruktionen mit Sequenzen von willentlichen Bewegungen von Augenteilen eingegeben werden, wobei die Sequenz, die zur Eingabe einer bestimmten Instruktion benötigt wird, für jeden Benutzer individuell ist.

Dies hat den Vorteil, dass Instruktionen nicht nur mit einer einfachen Augenbewegung eingegeben werden, die eventuell unbeabsichtigt gemacht werden könnte, sondern mit einer Sequenz von mehreren Bewegungen von Augenteilen, die nur willentlich gemacht werden können. Somit wird die Nicht-Repudiation der Instruktion gewährleistet. Da die Sequenz zur Eingabe einer Instruktion für jeden Benutzer individuell ist, kann sie auch verwendet werden, um den Benutzer zu authentifizieren.

Auf diese Weise können somit auch sicherheitskritische Instruktionen eingegeben werden (beispielsweise Instruktionen für elektronische Transaktionen), die nicht abgestritten werden können und für die eine sichere Authentifizierung des Benutzers wichtig ist.

Neben dem erfindungsgemässen Transaktionsverfahren bezieht sich die vorliegende Erfindung insbesondere auch auf ein Terminal und einen Server zur Ausführung des Verfahrens.

### Kurze Beschreibung der Zeichnungen

Nachfolgend wird eine Ausführung der vorliegenden Erfindung anhand eines Beispieles beschrieben. Das Beispiel der Ausführung wird durch folgende beigelegten Figuren illustriert:
Fig. 1 zeigt ein Blockdiagramm, in welchem schematisch ein erfindungsgemässes Terminal und ein erfindungsgemässer Server, der über ein Kommunikationsnetz mit diesem Terminal verbunden ist, illustriert werden.
Fig. 2 zeigt ein Beispiel eines Bildes mit einer Tastatur, das auf die Retina des Benutzers projiziert wird.
Fig. 3 zeigt ein Beispiel eines dreidimensionalen Bildes mit einer Tastatur, das auf die Retina des Benutzers projiziert wird.
Fig. 4 zeigt ein Datenflussdiagramm, in welchem schematisch die möglichen Verfahrenschritte für die Aufnahme der Sequenz für eine Instruktion in einem Ausführungsbeispiel der Erfindung dargestellt werden, und
Fig. 5 zeigt ein Datenflussdiagramm, in welchem schematisch die möglichen Verfahrenschritte für die Eingabe eines Befehls in einem Ausführungsbeispiel der Erfindung dargestellt werden.

### Wege zur Ausführung der Erfindung

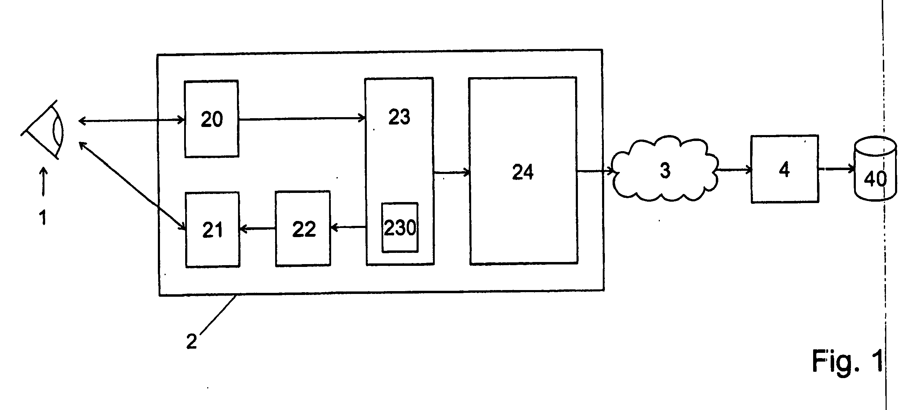

In der Figur 1 bezieht sich die Bezugsziffer 1 auf den Benutzer eines Terminals 2, mit welchem Instruktionen für einen Fernserver 4 eingegeben und über ein Kommunikationsnetz 3 gesendet werden können. Das Terminal 2 ist vorzugsweise tragbar und kann in einer bevorzugten Variante aus einem Mobilfunktelefon, aus einem Palmtop, aus einem Laptop, aus einem PDA (Personal Digital Assistant), aus einem mobile Assistant oder aus einer Kombination von verschiedenen miteinander verbundenen Komponenten bestehen, wobei die Verbindung über eine kontaktbehaftete Schnittstelle, beispielsweise gemäss PC-Card, oder vorzugsweise über eine kontaktlose Schnittstelle, beispielsweise gemäss IrDA oder Bluetooth, erfolgen kann. In einer bevorzugten Variante enthält das Terminal 2 eine nicht dargestellte Chipkarte, beispielsweise eine SIM-Karte (Subscriber Identification Module), in welcher benutzerspezifischen Daten abgelegt sind.

Das Terminal 2 enthält ein Modul 20 zur Bestimmung von Bewegungen von Augenteilen. Das Modul 20 besteht beispielsweise aus einem Augenrichtungsbestimmungsmodul (Eye Tracker), welches die aktuelle Betrachtungsrichtung basierend auf der Position der Pupille und/oder des Kopfes des Benutzers 1 bestimmen kann. Solche Augenbestimmungsmodule wurden unter anderem in der Patentanmeldung WO94/09472 beschrieben. In einer Variante kann das Modul 20 auch andere Typen von willentlichen Augenteilenbewegungen bestimmen, beispielsweise Blinzeln, wie in der oben angegebenen Patentanmeldung GB-A-2 281 838 beschrieben, Fokussierung usw. Je nach Variante können entweder Bewegungen nur eines Auges oder beider Augen ermittelt werden; in diesem letzten Fall können auch schielende Augenbewegungen ermittelt werden.

Wenn ein einfaches Augenrichtungsbestimmungsmodul verwendet wird, welches die Kopfposition nicht erfasst, kann die absolute Blickrickrichtung nicht bestimmt werden. In diesem Fall werden vorzugsweise differentiellen Augenbewegungen registriert - beispielsweise oben links - oben rechts - Mitte - oben rechts.

Damit das Terminal 2 nur auf Bewegungen von lebenden Wesen reagiert und nicht beispielsweise durch Vorstellung von animierten Bildern betrogen werden kann, werden vorzugsweise vom Modul 20 Körperreaktionen ermittelt. In einer bevorzugten Variante wird ein von der Körpertemperatur abhängiger Parameter gemessen, beispielsweise die Reaktion der Retina auf eine durch das Terminal 2 verursachte Erwärmung. In einer anderen Variante wird die Reaktion der Iris auf durch das Terminal 2 verursachte Lichtvariationen ermittelt. Auf diese Weise kann geprüft werden, ob das ermittelte Bild des Auges wirklich zu einem Menschen gehört.

Das Terminal 2 umfasst ausserdem Bildwiedergabemittel 21, die sichtbare Bilder für den Benutzer 1 wiedergeben können. In einer ersten Variante bestehen die Bildwiedergabemittel 21 aus einer konventionellen Anzeige, beispielsweise aus einer CRT-, Flüssigkristall- oder Plasma-Anzeige. In einer bevorzugten Variante bestehen sie aus einem sogenannten Microdisplay mit einem passenden Linsensystem, vorzugsweise aus einer virtuellen retinalen Anzeigevorrichtung (VRD, Virtual Retinal Display), die das dargestellte Bild direkt auf die Retina eines oder beider Augen des Benutzers 1 projiziert.

Virtuelle retinale Anzeigevorrichtungen wurden beispielsweise in den Patentanmeldungen WO-A1-94/09472, WO-A1-97/37339 und WO-A1-98/13720 beschrieben und brauchen demzufolge nicht mehr beschrieben zu werden. Die VRD-Vorrichtung wird von einem Videokontroller 22 gesteuert, um Bildsignale, die einem zweidimensionalen oder dreidimensionalen Bild entsprechen, auf die Fovea des Benutzerauges zu projizieren.

Das Terminal 2 wird von Datenverarbeitungsmitteln 23, beispielsweise in der Form eines Prozessors mit einem nicht dargestellten Speicherbereich, gesteuert. Der Prozessor steuert insbesondere den Videokontroller 22 und bearbeitet die Daten vom Augenteil-Bewegungsbestimmungsmodul 20. Ein Software und/oder Hardware-Modul (Sicherheitsmodul 230) im Prozessor oder mit diesem Prozessor verbunden, ist für die Sicherung der Datenübertragung mit externen Vorrichtungen 4 zuständig, indem zum Beispiel ein sicherer Kommunikationskanal aufgebaut wird, wie später erläutert.

Der Fachmann wird verstehen, dass die Datenverarbeitungsmittel 23 und das Sicherheitsmodul 230 aus einem einzigen Chip oder aus einer Vielzahl von miteinander logisch verbundenen Komponenten hergestellt werden können. In einer bevorzugten Variante, in welcher das Terminal 2 aus einem Mobiltelefon besteht, umfassen die Datenverarbeitungsmittel 23 vorzugsweise Komponenten im Mobiltelefon sowie Komponenten in der entfernbaren Chipkarte (SIM-Karte), die mit diesem Mobiltelefon verbunden wird. In einer bevorzugten Variante befinden sich insbesondere sicherheitskritische Komponenten, die vom Sicherheitsmodul 230 verwendet werden, in der Chipkarte.

Das Terminal umfasst ausserdem ein Kommunikationsteil 24, mit welchem es sich mit einem Kommunikationsnetz 3 verbinden kann. Das Kommunikationsteil 24 besteht vorzugsweise aus einem GSM oder UMTS-Kommunikationsteil, aus einem Modem, oder aus einer kontaktlosen Schnittstelle im Nahbereich, beispielsweise gemäss IrDA, Bluetooth, HomeRF oder DECT.

Das Kommunikationsnetz 3 ist beispielsweise ein Mobilfunknetz, beispielsweise gemäss GSM oder UMTS, könnte aber auch das Internet sein oder aus mehreren Netzen bestehen. Über das Kommunikationsnetz 3 kann sich das Terminal mit einem Fernserver 4 verbinden, beispielsweise mit einem http- oder WAP-Server, der vom Betreiber des Kommunikationsnetzes 3 und/oder von einem Dienstanbieter verwaltet wird. Die Datenübertragung zwischen dem Terminal 2 und dem Fernserver 4 wird vorzugsweise End-zu-End gesichert, beispielsweise mit dem Protokoll SSL (Secure Sockets Layer), TLS (Transport Layer Security) und/oder WTLS (Wireless Transport Layer Security). Daten, die vom Terminal 2 zum Fernserver 4 gesendet werden, werden vorzugsweise vom Sicherheitsmodul 230 elektronisch signiert, vorzugsweise mit einem elektronischen privaten Schlüssel, der in einem elektronischen Zertifikat in der SIM-Karte oder im Sicherheitsmodul 230 abgelegt ist.

Das Terminal 2 umfasst vorzugsweise zusätzliche nicht dargestellte Dateneingabemittel, beispielsweise eine Tastatur, eine Maus, ein Rollelement, ein Mikrophon usw., mit welchen die Applikation im Prozessor 23 gesteuert werden kann.

Der Benutzer 1 kann eine Session mit dem Fernserver 4 aufbauen, indem er die entsprechende URL-Adresse oder Telefonnummer in sein Terminal 2 eingibt. Eine Session kann beispielsweise aufgebaut werden, um eine Transaktion zwischen dem Benutzer 1 und dem Dienstanbieter, der den Fernserver 4 betreibt, durchzuführen, beispielsweise um ein Produkt oder eine Dienstleistung des Dienstanbieters zu bestellen und/oder zu bezahlen.

Während einer Session werden in der Regel Bilddaten des Fernservers 4 (beispielsweise HTML-Seiten oder WAP-Karten mit einem Bildinhalt) an das Terminal 2 übertragen und dem Benutzer 1 wiedergegeben. Mindestens gewisse Bilddaten enthalten vorzugsweise GUI-Objekte (Graphical User Interface), beispielsweise Hyperlinks, Kontrollkästchen, Radioknöpfe usw., die vom Benutzer 1 selektiert oder aktiviert werden können, um eine bestimmte Instruktion einzugeben, beispielsweise um eine andere Seite zu laden oder um eine Transaktion zu bestätigen.

Mindestens gewisse GUI-Objekte können mit den Augen selektiert oder aktiviert werden, um eine Instruktion einzugeben (beispielsweise indem mindestens ein Auge während mindestens einer vordefinierten Zeit in diese Richtung gerichtet ist). Vorzugsweise wird ein visuelles und/oder akustisches Feedback gegeben, sobald das Objekt selektiert worden ist.

Der Fernserver 4 des Dienstanbieters umfasst eine Benutzerprofil-Datenbank 40, in welcher Profildaten für jeden Benutzer 1 registriert sind. Die abgelegten Profildaten umfassen unter anderem für jeden Benutzer 1 die benutzerspezifischen Sequenzen von Augenbewegungen.

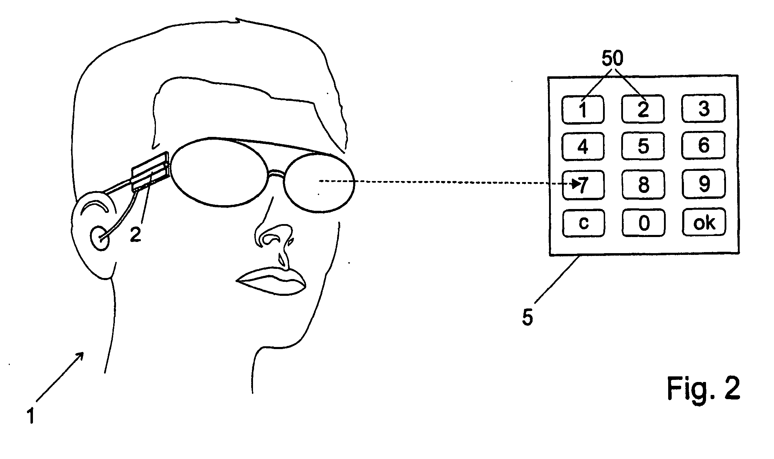

Die Figur 2 zeigt schematisch einen Benutzer 1 mit einer Ausführungsvariante des erfindungsgemässen Terminals, das hier in einer Brille integriert ist. Die Brille enthält ein Mobilfunkteil als Kommunikationsteil 24, eine VRD-Anzeigevorrichtung als Bildwiedergabemittel 21, welche Bilder auf die Retina des Benutzers 1 projizieren kann, und ein Eye-Trackingssystem. Das Bezugszeichen 5 zeigt das projizierte Bild. Im dargestellten Beispiel umfasst dieses Bild eine Vielzahl von GUI-Objekten, die hier den Tasten 50 einer virtuellen numerischen Tastatur entsprechen. Eine Taste "C" ermöglicht das Korrigieren der erfassten Daten während die Taste "ok" das Bestätigen erlaubt.

Erfindungsgemäss werden mindestens gewisse Instruktionen mit Sequenzen von willentlichen Bewegungen von Augenteilen eingegeben, wobei die Sequenz, die zur Eingabe einer bestimmten Instruktion benötigt wird, für jeden Benutzer individuell ist. Im dargestellten Beispiel werden gewisse Instruktionen durch Augenselektion einer benutzerspezifischen Sequenz von Tasten 50 eingegeben.

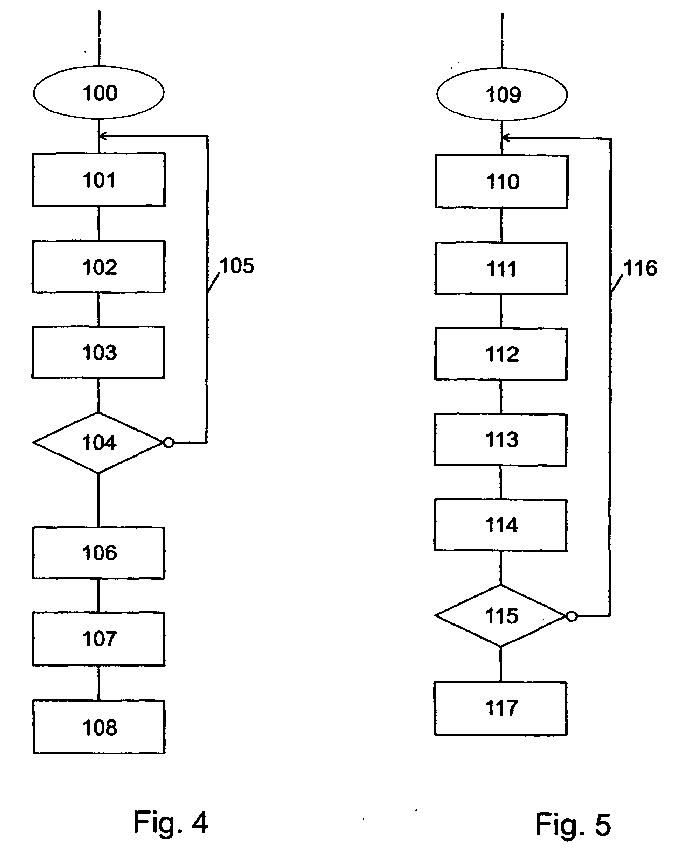

Die Figur 4 zeigt ein Datenflussdiagramm, in welchem schematisch die möglichen Verfahrenschritte für die Aufnahme 100 der benutzerspezifischen Sequenz für eine Instruktion in der Lernphase dargestellt werden. In einem ersten Schritt 101 wird die Instruktion vom Benutzer selektiert, die mit einer Sequenz von Augenbewegungen eingegeben wird. Können mehrere Instruktionen für eine bestimmte Anwendung codiert werden, kann die gewünschte Instruktion beispielsweise aus einer Liste gewählt werden, die vom Fernserver 4 bereitgestellt wird.

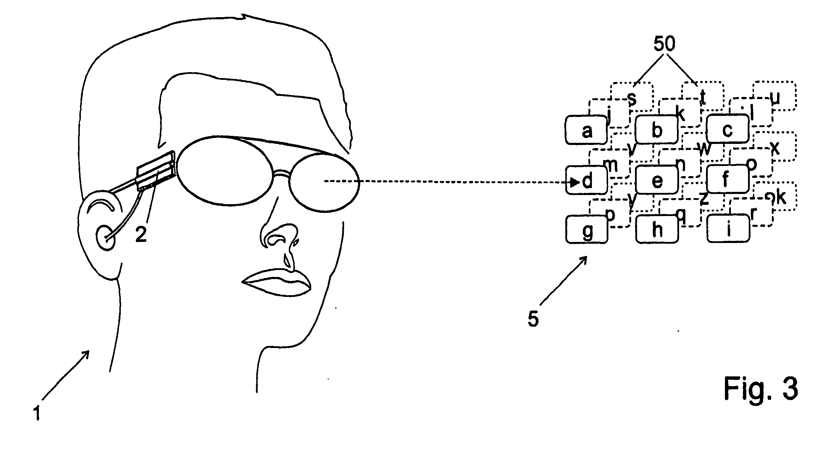

Im Schritt 102 gibt der Benutzer die Sequenz von Augenbewegungen ein, die mit der ausgewählten Instruktion assoziiert werden soll. Die Sequenz kann beispielsweise folgende Typen von Bewegungen von Augenteilen enthalten:
■ Vordefinierte Blickrichtungen, vorzugsweise in die Richtung von GUI-Objekten, beispielsweise von virtuellen Tasten 50. Auf diese Weise kann ein numerischer Code einfach durch Betrachten der entsprechenden Tasten eingegeben werden.
■ Blinzelbewegungen eines bestimmten Auges oder beider Augen.
■ Willentliche schielende Augenbewegungen.
■ Fokussierung der Augen auf eine bestimmte Distanz. Es ist damit beispielsweise möglich, verschiedene unterschiedlich weit entfernte GUI-Objekte auszuwählen. In der Figur 3 wird als Beispiel eine dreidimensionale virtuelle Tastatur dargestellt, die dem Benutzer wiedergegeben werden kann; der Benutzer kann eine Taste 50 auswählen, indem er die Blickrichtung und die Fokussierung anpasst.
■ usw.

Jede einzelne, als solche anerkannte Augenbewegung wird vorzugsweise während dieser Lernphase vom Prozessor bestätigt. Das Ende der Sequenz wird vorzugsweise vom Benutzer durch Selektion der virtuellen Taste "ok" oder durch eine spezielle, vordefinierte Augenbewegung, bestimmt. Die gesamte Sequenz wird vorzugsweise ein zweites Mal bestätigt (Schritt 103), oder solange nötig, bis vordefinierten Kriterien über die Wiederholungsqualität erfüllt sind.

Im Schritt 104 wird die Bestätigung mit der ersten Sequenz verglichen. Sind die beiden Sequenzen unterschiedlich, wird der Benutzer aufgefordert, den gesamten Prozess zu wiederholen (Pfeil 105). Je nach Sicherheitsanforderungen kann vom Benutzer verlangt werden, eine minimale Anzahl von Augenbewegungen pro Sequenz oder mindestens zwei unterschiedliche Typen von Augenbewegungen einzugeben. Wird hingegen die Sequenz akzeptiert, wird sie von den Datenverarbeitungsmitteln 23 codiert, beispielsweise einfach als numerische Sequenz, in einen Beleg verpackt, der anhand des Sicherheitsmoduls 230 vorzugsweise signiert und verschlüsselt (Schritt 106) wird. Im Verfahrenschritt 107 wird dieser Beleg durch das Kommunikationsnetz 3 übertragen und vom Fernserver 4 des Dienstanbieters empfangen und entschlüsselt. Im Verfahrenschritt 108 wird dann die entschlüsselte Sequenz mit dem Benutzer 1 und mit der ausgewählten Instruktion verknüpft und in der Benutzerprofildatenbank 40 abgelegt.

In einer Variante kann die aufgenommene Sequenz auch im Terminal 2 statt in einem Fernserver 4 abgelegt werden.

Die Signatur im Schritt 106 dient vor allem dazu, den Benutzer 1 zuverlässig zu authentifizieren. In einer Variante wird der Beleg mit dem privaten elektronischen Schlüssel des Benutzers elektronisch signiert; der Fernserver 4 verfügt über den entsprechenden öffentlichen Benutzerschlüssel, mit welchem die empfangene Signatur geprüft werden kann. In einer anderen Variante wird der Beleg mit biometrischen Parametern des Benutzers 1, beispielsweise mit einem (mit einer nicht dargestellten Retina-Bildaufnahmeeinheit aufgenommenen) Bild der Retina und/oder der Iris des Benutzers 1 verknüpft, die auch zum Fernserver 4 gesendet werden, und mit welchen die Identität des Benutzers zuverlässig geprüft werden kann. Es ist auch möglich, diese beiden Signierungsverfahren gleichzeitig einzusetzen.

Wie schon erwähnt, kann ausserdem ein von der Körpertemperatur abhängiger Parameter ermittelt werden und mit dem Beleg verknüpft werden, damit geprüft werden kann, ob das Terminal 2 wirklich von einem Menschen bedient wird und nicht von einer wiedergegebenen Bildsequenz betrogen wird.

Die Figur 5 zeigt ein Datenflussdiagramm, in welchem schematisch die Verfahrenschritte für die Eingabe 109 einer Instruktion mit einer Sequenz von willentlichen Augenbewegungen dargestellt werden. Die Sequenz der Augenbewegungen, die für eine bestimmte Instruktion benötigt wird, wird im Schritt 110 vom Benutzer 1 eingegeben und im Schritt 111 bestätigt, beispielsweise mit einem Blinzeln oder mit einer anderen speziellen Augenbewegung. Die eingegebene Sequenz wird im Schritt 112 codiert, anhand des Sicherheitsmoduls 230 elektronisch signiert und vorzugsweise verschlüsselt, wobei die Signatur auch biometrische Merkmale des Benutzers enthalten kann. Die signierte Sequenz wird im Schritt 113 durch das Kommunikationsnetz 3 an den Fernserver 4 übertragen, wo sie entschlüsselt wird und wo die Signatur geprüft wird. Ist die Signatur korrekt, wird beim Schritt 114 in der Datenbank 40 geprüft, ob die empfangene Sequenz einer abgelegten Sequenz des Benutzers entspricht (Matching).

Wird keine Instruktion in der Datenbank gefunden, die der empfangenen Sequenz entspricht, wird der Benutzer 1 beim Verfahrensschritt 115 aufgefordert, eine neue Sequenz einzugeben (Pfeil 116). Wird hingegen ein Match gefunden, kann die vom Benutzer definierte Instruktion aus der Datenbank herausgeholt werden (Schritt 117) und, je nach Instruktion oder nach Variante, entweder vom Fernserver 4 ausgeführt oder an das Terminal 2 übertragen werden.

In der Variante, in welcher die während der Lernphase aufgenommene Sequenz nur im Terminal 2 abgelegt worden ist, wird die in der Benutzungsphase eingegebene Sequenz mit aller im Terminal 2 abgelegten Sequenzen verglichen.

Der Fachmann wird verstehen, dass die verschiedensten Instruktionen je nach Anwendung eingegeben werden können. Das erfindungsgemässe Verfahren eignet sich insbesondere dazu, Geheimnisse (beispielsweise Passwörter oder PIN-Nummer) einzugeben. Es können aber auch andere Instruktionen (unter anderem Transaktionsbestätigungen mit "JA" oder "NEIN", oder komplexere Abfragen, die auch Text und/oder Zahlen als Variable enthalten können) mit diesem Verfahren eingegeben werden.

In dieser beschriebenen Ausführungsvariante wird die vom Benutzer eingegebene Sequenz im Fernserver 4 eines Dienstanbieters geprüft. In einer Variante der Erfindung wird die Sequenz von Augenbewegungen im Terminal 2 oder im Kommunikationsnetz 3 geprüft. In diesem Fall könnte die individuelle Prüfsequenz im Terminal 2 oder vorzugsweise in der Identifizierungskarte in diesem Terminal 2 abgelegt werden. Es ist auch möglich, mit demselben System je nach Anwendung das Prüfen im Terminal 2 oder in einem Fernserver 4 zu erlauben.

### Bezugszeichenliste

- 1: Benutzer
- 2: Terminal
- 20: Modul zur Bestimmung von Bewegungen von Augenteilen
- 21: Bildwiedergabemittel
- 22: Videokontroller
- 23: Datenverarbeitungsmittel
- 230: Sicherheitsmodul
- 24: Kommunikationsteil
- 3: Kommunikationsnetz
- 4: Fernserver
- 40: Benutzerprofil-Datenbank
- 5: Bild
- 50: Taste
- 100 bis 117: Verfahrensschritte

## Patentansprüche

1. Verfahren, mit welchem Benutzer (1) Instruktionen eingeben, wobei die benannten Instruktionen mit Sequenzen von mehreren willentlichen Bewegungen von Augenteilen eingegeben werden, wobei die individuelle Sequenz, die zur Eingabe einer bestimmten Instruktion benötigt wird, von einem Benutzer in einer Lernphase durch mehrere willentliche Bewegungen von Augenteilen eingegeben wird und für die Eingabe der bestimmten Instruktion vom Benutzer die individuell definierte Sequenz wiederholt wird.

2. Verfahren gemäss dem vorhergehenden Anspruch, in welchem die benannte Sequenz eine Vielzahl von Betrachtungsrichtungen umfasst.

3. Verfahren gemäss dem vorhergehenden Anspruch, in welchem dem benannten Benutzer ein Bild (5) wiedergegeben wird, und in welchem die benannten Betrachtungsrichtungen vordefinierten Bildteilen (50) entsprechen.

4. Verfahren gemäss dem vorhergehenden Anspruch, in welchem das benannte Bild (5) dreidimensional ist.

5. Verfahren gemäss einem der Ansprüche 3 oder 4, in welchem die benannten Bildteile einer virtuellen Tatstatur entsprechen.

6. Verfahren gemäss einem der Ansprüche 3 bis 5, in welchem das benannte Bild (5) auf einem Bildschirm dargestellt wird.

7. Verfahren gemäss einem der Ansprüche 3 bis 5, in welchem das benannte Bild (5) mit einer VRD-Vorrichtung wiedergegeben wird.

8. Verfahren gemäss einem der vorhergehenden Ansprüche, in welchem die benannte Sequenz unterschiedliche Fokalisierungsentfernungen umfasst.

9. Verfahren gemäss einem der vorhergehenden Ansprüche, in welchem die benannte Sequenz mindestens ein Blinzeln umfasst.

10. Verfahren gemäss einem der vorhergehenden Ansprüche, in welchem die benannte Sequenz mindestens eine willentliche schielende Augenbewegung umfasst.

11. Verfahren gemäss einem der vorhergehenden Ansprüche, in welchem die benannte Sequenz als numerischer Code konvertiert wird.

12. Verfahren gemäss dem vorhergehenden Anspruch, in welchem der benannte numerische Code elektronisch signiert wird.

13. Verfahren gemäss dem vorhergehenden Anspruch, in welchem der benannte Code mit dem privaten Schlüssel des benannten Benutzers (1) elektronisch signiert wird.

14. Verfahren gemäss dem Anspruch 12, in welchem der benannte Code mit biometrischen Merkmalen des Benutzers (1) signiert wird.

15. Verfahren gemäss dem vorhergehenden Anspruch, in welchem die benannten biometrischen Merkmale des Benutzers Augenmerkmale umfassen.

16. Verfahren gemäss dem vorhergehenden Anspruch, in welchem die benannten biometrischen Merkmale des Benutzers (1) Augenmerkmale von Augenteilen beider Augen umfassen.

17. Verfahren gemäss einem der vorhergehenden Ansprüche, in welchem ein von der Körpertemperatur abhängiger Parameter gemessen wird und mit der benannten Sequenz verknüpft wird.

18. Verfahren gemäss einem der vorhergehenden Ansprüche, in welchem ein von der Erwärmung der Retina abhängiger Parameter gemessen und mit der benannten Sequenz verknüpft wird.

19. Verfahren gemäss einem der vorhergehenden Ansprüche, in welchem die Reaktion der Iris auf Lichtvariationen gemessen wird und als Parameter mit der benannten Sequenz verknüpft wird.

20. Verfahren gemäss einem der vorhergehenden Ansprüche, in welchem die benannte Sequenz durch ein tragbares Terminal (2) ermittelt wird, wobei die benannte Sequenz durch ein Mobilfunkteil (24) im benannten Terminal über ein Mobilfunknetz (3) an einen Fernserver (4) übertragen wird.

21. Verfahren gemäss dem vorhergehenden Anspruch, in welchem der benannte Fernserver (4) von einem Dienstanbieter verwaltet wird, und in welchem die Verbindung zwischen dem benannten Mobilfunkteil (24) und dem benannten Fernserver (4) End-zu-End verschlüsselt wird.

22. Verfahren gemäss dem vorhergehenden Anspruch, in welchem die benannte Sequenz im benannten Fernserver (4) mit einer vom Benutzer (1) im voraus aufgelegten Sequenz verglichen wird, und in welchem die benannte Instruktion erst dann ausgeführt wird, wenn die eingegebene und die aufgelegte Sequenzen übereinstimmen.

23. Verfahren gemäss einem der vorhergehenden Ansprüche, in welchem eine Vielzahl von unterschiedlichen individuellen Sequenzen für jeden Benutzer (1) vorgesehen ist, wobei jede Sequenz einer anderen Instruktion entspricht.

24. Verfahren gemäss einem der vorhergehenden Ansprüche, in welchem die benannte Sequenz durch ein tragbares Terminal (2) ermittelt wird und mit einer in diesem Terminal (2) abgelegten Sequenz verglichen wird.

25. Fernserver (4) in einem Kommunikationsnetz (3) mit einer Datenbank (40), in welcher eine Vielzahl von individuellen Sequenzen von willentlichen Bewegungen von Augenteilen enthalten sind, die während der Lernphase der Ansprüche 1 bis 24 eingegeben wurden, wobei jede Sequenz einer bestimmten Instruktion eines bestimmten Benutzers (1) zugeordnet ist und wobei die Instruktionen mit einem Verfahren entsprechend den Ansprüchen 1 bis 24 eingegeben und aus dem Fernserver (4) abgerufen werden können.

## Claims

1. Method with which users (1) enter instructions, said instructions being entered with sequences of several voluntary movements of eye parts, the individual sequence required for entering a certain instruction being entered by a user in a learning phase through several voluntary movements of eye parts and the individually defined sequence is repeated by the user for entering the specific instruction.

2. Method according to the preceding claim, wherein said sequence comprises a plurality of viewing directions.

3. Method according to the preceding claim, wherein an image (5) is reproduced to said user and wherein said viewing directions correspond to predefined image parts (50).

4. Method according to the preceding claim, wherein said image (5) is three-dimensional.

5. Method according to one of the claims 3 or 4, wherein said image parts correspond to a virtual keyboard.

6. Method according to one of the claims 3 to 5, wherein said image (5) is represented on a screen.

7. Method according to one of the claims 3 to 5, wherein said image (5) is reproduced with a VRD device.

8. Method according to one of the preceding claims, wherein said sequence comprises different focussing distances.

9. Method according to one of the preceding claims, wherein said sequence comprises at least one blink.

10. Method according to one of the preceding claims, wherein said sequence comprises at least one voluntary squinting eye movement.

11. Method according to one of the preceding claims, wherein said sequence is converted as digital code.

12. Method according to the preceding claim, wherein said digital code is signed electronically.

13. Method according to the preceding claim, wherein said code is signed electronically with the private key of said user (1).

14. Method according to claim 12, wherein said code is signed with biometric characteristics of the user (1).

15. Method according to the preceding claim, wherein said biometric characteristics of the user comprise eye characteristics.

16. Method according to the preceding claim, wherein said biometric characteristics of the user (1) comprise eye characteristics of eye parts of both eyes.

17. Method according to one of the preceding claims, wherein a parameter dependent on the body temperature is measured and is linked with said sequence.

18. Method according to one of the preceding claims, wherein a parameter dependent on the warming of the retina is measured and linked with said sequence.

19. Method according to one of the preceding claims, wherein the reaction of the iris to light variations is measured and linked as parameter with said sequence.

20. Method according to one of the preceding claims, wherein said sequence is determined through a portable terminal (2), said sequence being transmitted through a mobile radio part (24) in said terminal over a mobile radio network (3) to a remote server (4).

21. Method according to the preceding claim, wherein said remote server (4) is administered by a service provider and wherein the connection between said mobile radio part (24) and said remote server (4) is encrypted end-to-end.

22. Method according to the preceding claim, wherein said sequence in said remote server (4) is compared with a sequence stored by the user (1) in advance, and wherein said instruction is only then carried out when the entered and the stored sequences correspond.

23. Method according to one of the preceding claims, wherein a plurality of different individual sequences is provided for each user (1), each sequence corresponding to another instruction.

24. Method according to one of the preceding claims, wherein said sequence is determined through a portable terminal (2) and is compared with a sequence stored in this terminal (2).

25. Remote server (4) in a communication network (3), having a database (40) in which a plurality of individual sequences of voluntary movements of eye parts are contained, that have been entered during the learning phase of the claims 1 to 24, each sequence being attributed to a certain instruction of a certain user (1) and the instructions being entered with a method corresponding to the claims 1 to 24 and being retrievable from the remote server (4).

## Revendications

1. Procédé avec lequel des utilisateurs (1) introduisent des instructions, lesdites instructions étant introduites avec des séquences de plusieurs mouvements volontaires de parties d'oeil, la séquence individuelle nécessaire pour l'introduction d'une instruction déterminée étant introduite par un utilisateur dans une phase d'apprentissage par plusieurs mouvements volontaires de parties d'oeil, et la séquence individuelle définie étant répétée pour l'introduction par l'utilisateur de l'instruction déterminée.

2. Procédé selon la revendication précédente, dans lequel ladite séquence comprend une pluralité de directions d'observation.

3. Procédé selon la revendication précédente, dans lequel une image (5) est restituée audit utilisateur, et dans lequel lesdites directions d'observation correspondent à des parties d'image (50) prédéfinies.

4. Procédé selon la revendication précédente, dans lequel ladite image (5) est tridimensionnelle.

5. Procédé selon l'une des revendications 3 ou 4, dans lequel lesdites parties d'image correspondent à un clavier virtuel.

6. Procédé selon l'une des revendications 3 à 5, dans lequel ladite image (5) est représentée sur un écran.

7. Procédé selon l'une des revendications 3 à 5, dans lequel ladite image (5) est restituée avec un dispositif VRD.

8. Procédé selon l'une des revendications précédentes, dans lequel ladite séquence comprend différentes distances de focalisation.

9. Procédé selon l'une des revendications précédentes, dans lequel ladite séquence comprend au moins un clignement.

10. Procédé selon l'une des revendications précédentes, dans lequel ladite séquence comprend au moins un mouvement d'oeil bigle volontaire.

11. Procédé selon l'une des revendications précédentes, dans lequel ladite séquence est convertie en code numérique.

12. Procédé selon la revendication précédente, dans lequel ledit code numérique est signé électroniquement.

13. Procédé selon la revendication précédente, dans lequel ledit code est signé électroniquement avec la clé privée dudit utilisateur (1).

14. Procédé selon la revendication 12, dans lequel ledit code est signé électroniquement avec des caractéristiques biométriques dudit utilisateur (1).

15. Procédé selon la revendication précédente, dans lequel lesdites caractéristiques biométriques de l'utilisateur comprennent des caractéristiques d'oeil.

16. Procédé selon la revendication précédente, dans lequel lesdites caractéristiques biométriques de l'utilisateur (1) comprennent des caractéristiques d'oeil de parties d'oeil des deux yeux.

17. Procédé selon l'une des revendications précédentes, dans lequel un paramètre dépendant de la température corporelle est mesuré et combiné à ladite séquence.

18. Procédé selon l'une des revendications précédentes, dans lequel un paramètre dépendant du réchauffement de la rétine est mesuré et combiné à ladite séquence.

19. Procédé selon l'une des revendications précédentes, dans lequel la réaction de l'iris à des variations de lumière est mesurée et combiné en tant que paramètre à ladite séquence.

20. Procédé selon l'une des revendications précédentes, dans lequel ladite séquence est déterminée par un terminal portatif (2), ladite séquence étant retransmise à travers un réseau radiomobile (3) à un serveur distant (4) par une partie radiomobile (24) dans ledit terminal.

21. Procédé selon la revendication précédente, dans lequel ledit serveur distant (4) est géré par un fournisseur de services, et dans lequel la connexion entre ladite partie radiomobile (24) et ledit serveur distant (4) est cryptée bout à bout.

22. Procédé selon la revendication précédente, dans lequel ladite séquence est comparée dans ledit serveur distant (4) à une séquence déposée à l'avance par l'utilisateur (1), et dans lequel ladite instruction n'est exécutée que si les séquences introduite et déposée concordent.

23. Procédé selon l'une des revendications précédentes, dans lequel une pluralité de séquences individuelles différentes sont prévues pour chaque utilisateur (1), chaque séquence correspondant à une autre instruction.

24. Procédé selon l'une des revendications précédentes, dans lequel ladite séquence est déterminée par un terminal portatif (2) et est comparée à une séquence stockée dans ce terminal (2).

25. Serveur distant (4) dans un réseau de communication (3) avec une banque de données (40) dans laquelle sont contenues une pluralité de séquences individuelles de mouvements volontaires de parties d'oeil qui ont été introduites pendant la phase d'apprentissage des revendications 1 à 24, chaque séquence étant affectée à une instruction déterminée d'un utilisateur (1) déterminé, et les instructions pouvant être introduites et appelées du serveur distant (4) avec un procédé correspondant aux revendications 1 à 24.
